# EUROPEAN PATENT APPLICATION

(11) **EP 1 791 338 A1**
(43) Date of publication of application: **30.05.2007**
(21) Application number: 05257317.7
(22) Date of filing: 29.11.2005
(51) Int. Cl.: H04M 3/42, H04M 3/36

(54) **Measuring the gain in efficiency which is attained by a CTI system**

(71) Applicant: BRITISH TELECOMMUNICATIONS public limited company, London EC1A 7AJ (GB)
(72) Inventor: Booton, Laurence Jon, Suffilk, IP12 4DZ (GB)
(74) Representative: Lidbetter, Timothy Guy Edwin

(57) **Abstract**

A monitoring system 19 is associated with a computer-telephony integration (CTI) server 18, which monitors the occurrence of call events performed by the server 18. Comparisons may then be made between the behaviours of users of CTI-clients 14, 15 and users who only have conventional handsets 11, in particular the number of failed call attempts e.g. misdialled (unobtainable) busy, not answered, and the time spent on such attempts. Such comparisons may be made between different users at the same time, or the same user before and after he is provided with a CTI client device 14, 15. Comparisons may also be made between the usage of CTI-enabled terminals 12, 13 when communicating with each other, compared with how they behave when communicating with a user who only has a conventional telephone extension 11 and is not associated with a CTI-enabled terminal. Such data may be used to identify and quantify the benefits of installing a CTI terminal.

## Description

This invention relates to the monitoring of usage of telecommunications services connected through a private switchboard, call centre, or the like. Such usage is monitored for various purposes, such as to determine the volume of calls, the rate at which calls are being answered or made, the proportion of failed calls (incoming calls that are not answered, or outgoing calls hitting "busy" or "Number Unobtainable"), waiting time for calls to be answered, and other factors. Such systems are usually designed to monitor the performance of the users of the system.

The present invention is particularly concerned with measurement of statistics on the performance of the system itself, rather than that of its users. It should be noted in this context that the performance of any system depends on the behaviour of its users, and the uses to which it is put.

CTI (computer/telephony integration) systems exist, which have the ability to integrate a computer server with a Private Branch exchange (PBX) to perform some of these functions. One such system is described in the present applicant's International patent Application WO 96/31044.

Among the facilities offered by CTI are the automation of the selection of a connection, avoiding the need to enter a directory number using a dial or keypad, with the attendant possibilities of selecting a directory number other than that intended, or one which is barred or non-existent. One such system operates by allowing a user to select an entry on a computerised directory which causes an attempt to be made to call the telephone connection identified in the directory, using the linkage between the computer system and the telephone system.

CTI can also be used to facilitate call-answering, by using the computer to identify a party attempting to call the user (using calling line identity or a similar facility) and processing the call in a manner pre-selected by the user, such as diversion of the call to another line or to a facility such as voicemail. One simple application is to display the identity of the calling line (or a directory entry corresponding to that identity), and allowing the call to be answered by an input from the computer data entry system (mouse click, "return" key, etc)

Systems are now coming into use, which provide "Presence" type functionality to allow members of a dispersed group to work together. Some systems can also indicate which a users' telephone lines are currently busy, and therefore currently unable to take calls, without having to attempt a call to ascertain that information.

CTI systems are marketed on the basis of efficiency gains. For example, the time saved over manual dialling, may out-weigh the initial outlay on installing the system. Other factors may also be taken into account,, such as a reduction in the possibilities of misdialling, or dialling busy lines. Also, because peoples' presence, i.e. "On the phone" or "Away" can be determined, time can be saved by not attempting calls that are not going to succeed for these reasons. However, the efficiency gains conferred by such systems are difficult to quantify without actually installing the system, and even then it is difficult to determine whether a given operation would have had a different outcome under the two systems. In particular, users may adopt new behaviours to exploit the capabilities of the system, but it is difficult to predict in advance what these would be, or how many users would do so.

The present invention provides a telephony usage monitoring means for detecting the occurrence of call-related events taking place in relation to one or more telephone connections, and means for determining therefrom the outcome of individual call attempts. It also provides a method of monitoring the usage of a telephony system in which call-related events taking place in relation to one or more telephone connections are recorded, and the outcomes of individual call attempts are determined therefrom.

Note that the call attempt, and not the call itself, is the event being monitored. The outcome to be measured may be the duration of the call attempt. This duration, as distinct from that of the call itself, is a period of unproductive time. This can be significant, especially if the durations of the calls themselves tend to be short.

The call-related events may include the initiation of an outgoing call request and the consequent generation of a call attempt to a called party. The times of occurrence of two or more call-related events may be detected, allowing the time taken to generate such a call attempt to be derived therefrom.

The call-related events may also include the receipt of an incoming call and the answering of such a call, there being a plurality of available methods for answering an incoming call, and the monitoring means having means for determining the time taken to answer such a call.

The sequence of events detected may also be used to determine the success or failure mode of the call attempt, by detecting whether the call attempt generates a busy tone, unobtainable tone, ringing tone, etc, and whether, if the attempt is successful (i.e ringing tone is obtained) whether it is answered. This allows failed calls (calls to busy or non-existant numbers, other calls that fail to be answered, and calls to the wrong number) to be identified.

In a particularly preferred embodiment, there may be a plurality of available methods for initiating call requests and answering incoming calls, thereby allowing a comparison between the speed and success rates of the different methods.

The plurality of available methods may include a computer-telephony integration (CTI) system. The different methods may be made available at different times to a given user or group of users, and/or to different users at the same time, to allow such comparisons to be made.

The invention allows telephony operation and outcomes to be tracked, so that performance of telephony operations initiated from the CTI application can be recorded and compared against records of manual operations.

The monitoring means may also monitor functions available to the users of the system that may affect their usage of the telephone system. This allows the system to determine whether calling patterns are affected by the ability of user to be aware of each other's activities. For example, the invention can be used to track user presence against telephony operations. This allows individuals in the same workgroup to each determine from the "presence" function what the others are doing and thus whether they are available to take a call. The telephony operations (call attempts etc) made between such individuals can be compared with telephony operations between people who are not in the same workgroup. For example, users aware of each others' presence are likely to make fewer failed call attempts. Their calling patterns may also change in other ways - for example telephone calls made simply to establish a person's whereabouts are unnecessary if that information is available from the "presence" function. The invention allows such differences in user behaviours to be monitored automatically, without any conscious input from the users that might distort the results.

An embodiment of the invention will now be described by way of example with reference to the drawings, in which:
Figure 1 is a schematic diagram of a Computer-Telephony Integration (CTI) installation incorporating the invention
Figures 2 to 5 are flow diagrams illustrating the progress of various call events that may be monitored by the invention

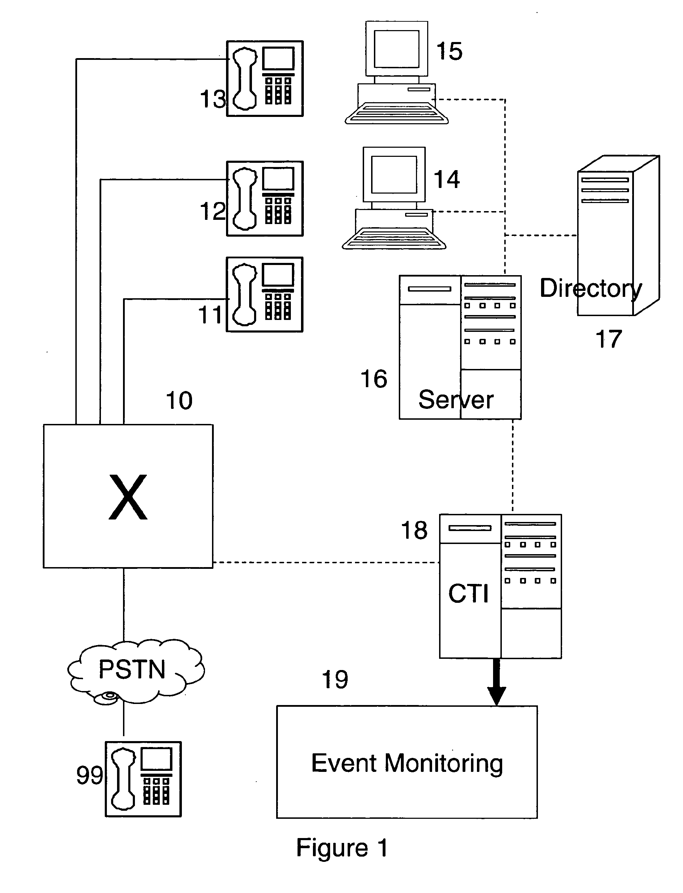

In the arrangement of Figure 1, a conventional private branch exchange (PBX) 10 is connected to a number of telephone handsets 11, 12, 13. Such connections may be made by any conventional telephony means, such as fixed or wireless connections. In conventional manner, the PBX 10 is connected to the public switched telephone network (PSTN) to allow calls to be connected to external lines 99.

Associated with some of the handsets 12, 13, are respective computer terminals 14, 15. These may be integrated into the same physical handset, or may be stand-alone terminals. The computer terminals communicate over a data connection such as a local area network with a computer server 16 which provides access to a number of applications, of which two need to be mentioned here. The first is an electronic directory 17, storing information, accessible to the users of each terminal 14, 15, about the other users of the system such as their job description and telephone number. The other application is a computer-telephony integration system 18, providing an interface between the PBX 10 and the computer terminals 14, 15. All of these applications 16, 17, 18 communicate with each other and with the PBX 10 over a data network such as a local area network (LAN) or the "internet".

A computer terminal 14 and the PBX connection of its associated telephone 12 are associated in the CTI server 18 by means of an initial registration procedure such as that described in the applicant's earlier International Patent Specification WO99/51015, or European Patent Application 05255169.4 (filed 23rd August 2005).

The computer telephony integration (CTI) system 18 provides an interface between a user's computer terminal 14 and the PBX 10, allowing the integration of the functions they provide. For example, a user may have the facility to access the directory 17, identify a PBX extension (for example the handset 11) and, using the terminal 14, transmit an instruction to the PBX 10 to set up a connection between his own handset 12 and the selected extension 11. The necessary operations are then performed by the PBX, starting by putting the PBX connection to the user's own handset 12 into an "off hook" state. This system avoids the problem of misdialling, as the number is extracted and dialled automatically when the user selects the required directory entry.

Other functions may be provided by the server 18, such as transmitting to a computer terminal 15 the identity of the party making a call to the associated telephone 13 (using the directory 17 to retrieve the details of the calling party), so that the calling party can be identified. Other functions of the PBX, such as call diversion, can also be controlled from the terminals 14, 15 using the interface 18 between the server 16 and the PBX 10.

Another function that may be provided on such a system is the ability to monitor the activities of other users connected to the same server 16. For example, it is possible for the user of a terminal 14 to interrogate the PBX 10 to determine whether the user of another terminal 15 (and its associated telephone line 13) is currently using the telephone 13, and whether a diversion has been set up from that line to another line or to a function such as voice mail. This can be useful as the user of the terminal 14 can then know what to expect if he attempts to call the PBX extension 13 associated with the user of the terminal 15 - and can decide whether to proceed with such a call attempt.

It will be seen that a computer telephony integration application can improve efficiency in a work environment by reducing the number of calls that fail, either through misdialling (resulting in a very short call or an "unobtainable" tone, depending on whether the number actually dialled corresponds to a terminal other than the one intended, or none at all, or because the called party is engaged on another call or has diverted his calls, and also by allowing users to screen incoming calls and choose whether to answer them. However, the efficiency gains conferred by such systems are difficult to quantify. Even once the system is installed it is difficult to determine whether a given operation would have had a different outcome under the two systems.

The present invention provides a monitoring system 19 associated with the CTI server 18, which monitors the occurrence of call events performed by the server 18. Comparisons may then be made between the behaviours of users of CTI-clients 14, 15 and users who only have conventional handsets 11. Such comparisons may be made between different users at the same time, or the same user before and after he is provided with a CTI client device 14, 15. Comparisons may also be made between the usage of CTI-enabled terminals 12, 13 when communicating with each other, compared with how they behave when communicating with a user who only has a conventional telephone extension 11 and is not associated with a CTI-enabled terminal.

Such comparisons may be useful to the suppliers of CTI systems in demonstrating the benefits of such a system, as they can provide a pilot installation consisting of the CTI server 18, together with a small number of CTI terminals 14, 15. The CTI server 18 co-operates with the PBX 10 and thus the event monitor 19 monitors the behaviours of the users of all terminals 11, 12, 13, whether or not they have the CTI facility 14, 15, allowing the comparisons described above to be made.

The data obtained may also be useful in determining the likely volume of traffic to be expected in such a system when installed for all users, which may be quite different from the traffic in pre-existing systems because the CTI system facilitates new practices and behaviours in its users.

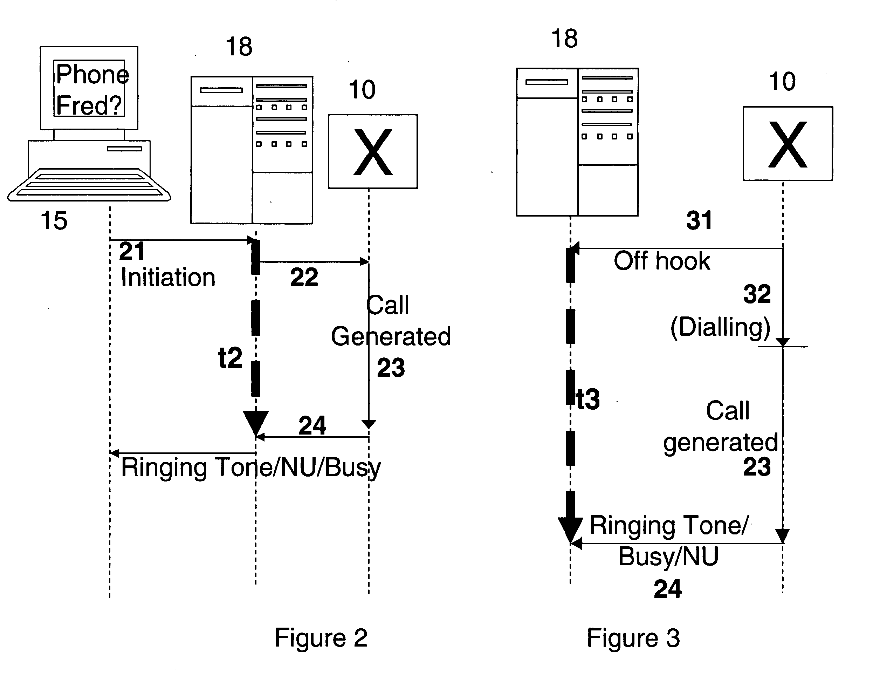

Figures 2 to 5 are diagrammatic representations of the various signals that are detected by the monitor 19 as they are handled by the CTI server 18, in co-operation with the PBX 10. The monitor can detect whether a user initiates or answers a call using the CTI system 15 or using a handset 11 and the different usage patterns observed for users to whom the CTI system 15 is available, and those to whom it is not.

Figures 2 and 3 show the different events that occur when a service is initiated from the Client Application (via a CTI-enabled terminal) 15 (figure 2), and from a conventional PBX-connected telephone handset 11 (Figure 3).

An integer-value Call ID is set by the CTI system that is used in every event report that is part of the same call. Thus the Call ID can be used to identify events forming part of the same call.

Considering firstly Figure 2, once the desired called party has been selected, a call to a desired destination terminal can be placed by a keystroke on an input device of the user terminal 15. The destination terminal may be connected to the same PBX 10, or to a different one, and if it is connected to the same PBX 10 it may itself be CTI-enabled, or not. The monitor 19 is arranged to distinguish such destination terminals, and categorise the call characteristics accordingly.

The call initiation causes a first request 21 to be generated in the CTI system 18, which in turn generates an instruction 22 to the PBX 10, and also causes the call ID to be set. The sequence of events is as follows:
The call request/event scenario will be described in terms of ECMA-CSTA standards: (reference ECMA-269 Services for Computer Supported Telecommunications Applications (CSTA) Phase III, 6^{th} edition (June 2004) ISO/IEC 18051). However, this is purely an embodiment: any suitable protocol, either standard or proprietary, may be used.
CSTA MakeCall 21 (message from client 15 to CTI server 18 to initiate a call - call ID set),
CSTA MakeCall 22 (CTI 18 instructs PBX 10 to generate call)
PBX 10 generates call 23 - this sets up the connection between the user handset 13 and the called party
CSTA MakeCall Response. 24 - the PBX 10 receives a message that the call attempt has been delivered, and reports either that it is successfully ringing at the far end (CSTA Delivered), or that the call has failed (CSTA Failed), and in either case transmits a report 24 to the CTI server 18. The failure reason could be "busy" (line engaged) or "number unobtainable" (NU). The monitor 19 measures the time t2 between the call initiation 21 and the call delivery report 24, and reports it as a successful call attempt or as a failed call attempt (with reason for failure). Note that in this context a "successful" call attempt means one that gets a ringing tone - it is immaterial whether or not the call is actually answered.

Note that the server 18 receives data from the PBX 10 for all telephone terminals 11, 12, 13, whether or not they are associated with a CTI-enabled terminal 14, 15, so the monitor 19 can also monitor calls originated from any handset 11 which is not associated with a CTI enabled terminal, as shown in Figure 3. The number of successful and failed calls, and reasons for failure, can therefore be monitored by the event monitor 19 for handset-initiated calls as well as CTI-initiated ones. In such a case the duration of the call attempt t3 (initiation to ringing or failure) can also be determined: in this case service initiation is detected when the PBX 10 detects the handset going "off-hook" 31. The call is not generated immediately, as the user must first select the required number using a dial or keypad. Call generation 23 and the response thereto 24 are then same as for the CTI system (Figure 2), with the response being reported to the CTI system 18 and detected by the monitor 19. This allows statistics of calls initiated from the CTI terminals 14,15 to be compared with those initiated manually from the handset 11, 12, 13, by comparing the times t2 (from initiation 21 to completion 24) and t3 (from initiation 31 to connection 24).

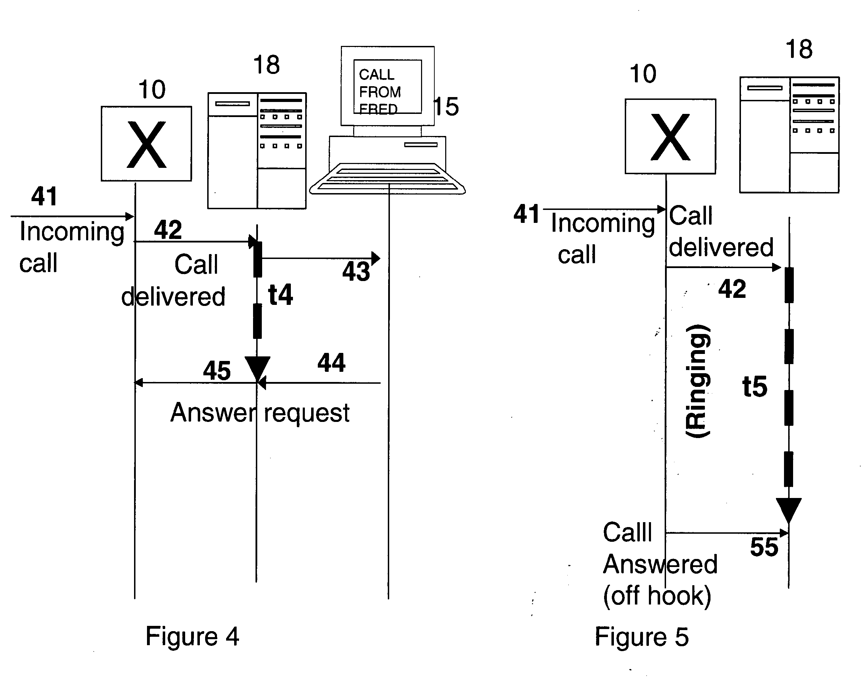

As shown in Figures 4 and 5, the time taken to answer a call using a CTI-enabled terminal 14, 15 can also be compared against manually picking up the associated telephone 12, 13. When an incoming call 41 from another terminal 99 occurs, the PBX 10 causes the relevant handset 12, 13 to ring. It also delivers a report 42 to the server 18 that a call has been delivered, and sets a call ID as before. The originating terminal may be connected to the same PBX 10, or to a different one, and if it is connected to the same PBX 10 it may be CTI-enabled, or not. The monitor 19 is arranged to distinguish between such terminals, and categorise the call accordingly. If the remote terminal is associated with the same PBX 10 as the target terminal 11, 15, statistics are collected for both originating and destination terminals.

As shown in Figure 4, if the called party has a CTI client application 15, the server 18 forwards the report 43 to the client 15 to alert the user to it and allow him to answer it using the CTI capability of the client terminal 15.. The user may generate a response 44, for example by pressing a key on an input device of the terminal 15, causing the CTI server to transmit a response 45 to the PBX 10, which is detected by the monitor 19. The PBX then completes the connection. The call answering time t4 is the interval between delivery 42 and answer 45 of the call.

If the call is answered manually, as shown in Figure 5, the call is connected when the handset 11 goes off-hook, and this is detected by the PBX 10 and reported to the CTI server 18 (55). The call answering time t5 is the interval between the PBX's reports of call delivery 42, and call answer 55.

Other characteristics of calls may be monitored, such as their duration after the call is answered. This would help to identify misdialling, in instances where the number dialled is a real connection, but not the one intended by the caller. Such calls generate ringing tone, but if they are answered, the calls tend to be very short. As stated above, misdialling to a non-existant number (NU) will be identified by the call failed message.

Other characteristics can be monitored by the system to assess any of the call scenarios of ECMA-269 Services for Computer Supported Telecommunications Applications (CSTA) Phase III, 6^{th} edition (June 2004) ISO/IEC 18051. Statistics may be generated to compare the success and speed of screen based invocation of any such service against manual invocation of the same service.

The system can also monitor the usage of individual users, to compare the way the telephony system is used by different categories of user, depending on the type of work they do and the equipment they have been provided with. Statistics can record performance in terms of time, from which financial cost comparisons can be derived using information on the costs of time attributable to the organisation, group or individual.

The statistics can be given further meaning by interrogating the office server 16 for user presence for example, Microsoft's LCS2005 (Live Communication Server) has a SIP interface that allows a user14 to interrogate it for presence information of another user 15, to identify whether the user is present and, if so, whether he is using the telephone.
A typical presence system, such as LCS, provides information on the users' phone numbers, making it possible to integration of this facility with the present invention to allow the statistics to incorporate telephony performance of users who can see each other's presence, against users who cannot. For example, one can determine whether "presence aware" users make fewer failed (busy) call attempts,

Typically, presence based systems offer collaborative tools, such as Whiteboards. Telephony statistics can be compared with the use of such tools.

The embodiment has been described in terms of a conventional PBX. However, the users might be performing telephony via a SIP based soft PBX or in a non-PBX environment on a SIP peer to peer basis. Telephony statistics can still be monitored in such systems, and associated with usage of the presence using the SIP URIs.

The invention is applicable to traditional PBXs, PSTN, Centrex, Hosted, Mobile and Managed switches, either circuit switched or VoIP, and in fact any current or future communications environment. The Computer Terminal 15 and Communications Terminal 13 are described as separate devices but they could equally well both be embodied in a single physical device, such as a PC, mobile handset, PDA etc.

## Claims

1. A telephony usage monitoring means for detecting the occurrence of call-related events taking place in relation to one or more telephone connections, and means for determining therefrom the outcomes of individual call attempts.

2. A telephony usage monitoring means according to claim 1, wherein the call-related events include the initiation of an outgoing call request and the generation of a call attempt to a called party.

3. A telephony usage monitoring means according to claim 2, the monitoring means having means for detecting the times of occurrence of two or more call-related events and deriving therefrom the time taken to generate such a call attempt.

4. A telephony usage monitoring means according to claim 2 or 3, the monitoring means having means for determining the success or failure mode of such a call attempt.

5. A telephony usage monitoring means according to claim 2, 3 or 4 in association with a telephone system which provides a plurality of available methods for initiating a call request.

6. A telephony usage monitoring means according to any preceding claim, wherein the call-related events include the receipt of an incoming call and the answering of such a call.

7. A telephony usage monitoring means according to claim 6, having means for determining the time taken to answer such an incoming call.

8. A telephony usage monitoring means according to claim 6 or 7 in association with a telephone system which provides a plurality of available methods for answering an incoming call.

9. A telephony usage monitoring means according to claim 5 or 8, comprising means to compare the success and speed of the different methods

10. A telephony usage monitoring means according to claim 9, wherein the methods to be compared include a screen based invocation of a service.

11. A telephony usage monitoring means according to claim 9 or 10, wherein the methods to be compared include manual invocation of a service.

12. A telephony usage monitoring means according to claim 5, 8, 9, 10 or 11, in which the different methods are made available at different times to a given user or group of users.

13. A telephony usage monitoring means according to claim 5, 8, 9, 10, 11 or 12, in which the different methods are made available to different users at the same time.

14. A telephony usage monitoring means according to any preceding claim, further comprising means to monitor functions available to the users of the system that may affect their usage of the telephone system.

15. A method of monitoring the usage of a telephony system in which call-related events taking place in relation to one or more telephone connections are recorded, and the outcomes of individual call attempts are determined therefrom.

16. A method according to claim 15, wherein the call-related events include the initiation of an outgoing call request and the generation of a call attempt to a called party.

17. A method according to claim 16, wherein the time elapsing between call-related events is measured to generate a measure of the time taken to establish a call attempt.

18. A method according to claim 16 or 17, wherein the success or failure mode of the call attempt is recorded.

19. A method according to claim 16, 17 or 18, applied to a telephone system having a plurality of available methods for initiating a call request.

20. A method according to claim 15, 16, 17, 18 or 19, wherein the call-related events include the receipt of an incoming call and the answering of such a call.

21. A method according to claim 19, wherein the time elapsing between call-related events is measured to generate a measure of the time taken to answer such an incoming call.

22. A method according to claim 20 or 21, applied to a telephone system which provides a plurality of available methods for answering an incoming call.

23. A method according to claim 19 or 22, in which the success and speed of the different methods are compared.

24. A method according to claim 23, wherein the methods to be compared include a screen based invocation of a service.

25. A method according to claim 23 or 24, wherein the methods to be compared include manual invocation of a service.

26. A method according to claim 19, 22, 23, 24 or 25, in which the different methods are made available at different times to a given user or group of users.

27. A method according to claim 19, 22, 23, 24, 25 or 26, in which the different methods are made available to different users at the same time.

28. A method according to any of claims 15 to 27, further comprising the steps of monitoring functions available to the users of the system that may affect their usage of the telephone system.
